# EUROPEAN PATENT SPECIFICATION

(11) **EP 1 828 321 B1**
(45) Date of publication and mention of the grant of the patent: **25.03.2009**
(21) Application number: 05854988.2
(22) Date of filing: 16.12.2005
(51) Int. Cl.: C09D 5/03

(54) **PROCESS FOR THE PREPARATION OF POWDER COATING COMPOSITIONS**
VERFAHREN ZUR HERSTELLUNG VON PULVERBESCHICHTUNGSZUSAMMENSETZUNGEN
PROCEDE DE PREPARATION DE COMPOSITIONS DE REVETEMENT EN POUDRE

(30) Priority: 20.12.2004 US 637543 P
(43) Date of publication of application: 05.09.2007
(73) Proprietor: E.I. DU PONT DE NEMOURS AND COMPANY, Wilmington, DE 19898 (US)
(72) Inventor: DECKER, Owen, H., Houston, TX 77065 (US); WULF, Martin, 40764 Langenfeld (DE); WILKENHOENER, Uwe, 42107 Wuppertal (DE)
(74) Representative: Biering, Christine
(86) International application number: PCT/US2005/046356
(87) International publication number: WO 2006/069149

(56) References cited:
- WO-A-20/05123848
- US-A- 5 527 859

## Description

### Field of the Invention

The invention relates to a process of preparation of powder coating compositions with desired gloss levels of the coatings on different substrates.

### Description of Related Art

Powder coatings, which can be cured by ultraviolet (UV) light, have been under development for many years. Typically, these compositions contain a binder resin with ethylenically unsaturated groups and a specific photoinitiator to initiate the photo-polymerization. This renders it possible to cure such compositions in a very short time and to improve quality and productivity with low operating and equipment costs.

The use of matting agents to adjust the gloss to the desired level, such as, waxes, silica, glass pearls, and crystalline resins as well as the use of dry-blends of chemically incompatible powders or the use of different process conditions, such as, different curing conditions, are often difficult to control or are inefficient or often lead to coatings with a loss in technological properties.

The U. S. Application No. 60/579,641 filed June 15, 2004, WO 2005/123848 (docket no. FA1244) relates to a process for the preparation of powder coatings with desired gloss levels wherein the applied and uncured powder coating composition is irradiated with high energy radiation before melting the powder particles and curing the coating.

US-A 5 527 859 discloses a powder coating which is UV irradiated after the coating is applied onto a substrate.

### Summary of the Invention

The invention relates to a process of preparation of a powder coating composition providing a desired gloss level of the resulted coatings comprising the following steps of:
a) providing particles of a powder coating composition having a number average particle size in the range of 1 to 300 µm,
b) irradiating the particles with high energy radiation under near-ambient temperature, and
c) discharging the irradiated particles of the powder coating composition.

The process according to the invention provides powder coating compositions producing a desired gloss level of the coatings by varying the time period and the intensity of the UV-irradiation of the powder coating particles in step b). No change of the powder coating composition, such as, the addition of specific components, such as, e.g., gloss control agents is necessary to to achieve the desired gloss level. Hence, the technological properties of the cured coating, such as, abrasion, scratch and scuff resistance, leveling, outdoor stability, chemical resistance and hardness remain at the original level.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both preceded by the word "about." In this manner, slight variations above and below the stated ranges can be used to achieve substantially the same results as values within the ranges. Also, the disclosure of these ranges is intended as a continuous range including every value between the minimum and maximum values.

All patents, patent applications and publications referred to herein are incorporated by reference in their entirety.

The present invention is based upon the process wherein the level of gloss of a powder coating can be controlled by using of powder coating particles which are irradiated with high energy radiation under near-ambient temperature after the production of the powder coating particles and before the application of the particles on the substrate surface.

The control of the gloss level can be achieved using powder coating particles irradiated by varying the conditions of irradiation of the powder particles.

The gloss of finishes by using powder particles prepared according to this invention is measured at 60° according to DIN 67 530 and can be adjusted in the range of, e.g., 5 to 90 by using the novel process.
Typically, a matt finish has a gloss in the range of 1 to 20, a high gloss finish has a gloss in the range of 60 to 95, and a semi-gloss or lower gloss finish in the range of 20 to 40.

UV (ultraviolet) -radiation or electron beam radiation may be used as high-energy radiation. UV-radiation is preferred. Irradiation may proceed continuously or discontinuously, that means in cycles.

The particles of a powder coating composition are provided as mentioned in step a) according to the invention. This can be done by several techniques. It is important for the process of irradiating the powder coating particles to select a technique wherein the individual particles of the powder coating composition are able to be involved in the irradiation with high energy radiation of step b) according to the invention.

The generic process arrangement applicable for the process of invention has to fulfill the following process functions in principle: a powder feed dosator, a UV irradiation source capable of irradiating the powder and a collector for the irradiated powder particles. Additionally it is preferably to combine the powder irradiation process arrangement with a thermo-regulating system.

For instance, the powder coating particles can be exposed to the irradiation in a process arrangement consisting in principle of the following technical items: a continuous powder feed-dosator supplied with a particle sieve; a UV irradiation chamber supplied with a UV light source which is positioned at the fixed distance from the powder main stream; a powder particle collector for isolation of the irradiated particles. According to the invention, the individual powder particles are irradiated with the highenergy radiation while flowing continuously or discontinuously through the irradiation workspace between the sieve dosator and the collector.

Other principle examples appropriate for the powder particle irradiation include but are not limited to a UV fluidized bed hopper, a UV reactor with the stirrer or a UV loop-type reactor.

The irradiation step b) with high energy radiation is carried out under near-ambient temperature, that means, temperatures below the glass transition temperature of the coating composition, e.g., in the range of 0 to 60°C, preferable 15 to 30°C.

Irradiation may be carried out, for example, in a belt unit fitted with one or more UV-radiation emitters or with one or more UV-radiation emitters positioned in front of the object to be irradiated, or the area to be irradiated, and/or the UV-radiation emitters are moved relative to one another during irradiation.

In principle, the duration of irradiation distance from the object and/or radiation output of the UV-radiation emitter may be varied during UV irradiation. The preferred source of radiation comprises UV-radiation sources emitting in the wavelength range from 180 to 420 nm, in particular from 200 to 400 nm. Examples of such UV-radiation sources are optionally doped high, medium and low pressure mercury vapor emitters and gas discharged tubes, for such as, for example, low pressure xenon lamps. Apart from these continuously operating UV-radiation sources, however, it is also possible to use discontinuous UV-radiation sources. These are preferably so-called high-energy flash devices (UV-flash lamps for short). The UV-flash lamps may contain a plurality of flash tubes, for example, quartz tubes filled with inert gas, such as xenon.

The distance between the UV-radiation sources and the powder coating particles to be irradiated according to the invention may be, for example, 0.5 to 300 cm.

Irradiation with UV-radiation may proceed in one or more irradiation cycles. In other words, the energy to be applied by irradiation may be supplied completely in a single irradiation cycle or in portions in two or more irradiation cycles.

For step b), the irradiation time with UV-radiation may be, for example, in the range from 1 millisecond to 300 seconds, preferably, from 0.1 to 60 seconds, for each cycle, depending on the number of flash discharges selected. If continuous UV-radiation sources are used, the irradiation time for step b) may be for example in the range from 0.5 seconds to about 30 minutes, preferably, less than 1 minute.

The UV dose, which is typically referred to as the time integral of irradiance, is an important parameter that affects especially the irradiating efficiency in the step b). To achieve different gloss levels as desired, the UV dose can be varied from low to high dose. In this way, in principle, lower gloss coatings are obtained by higher UV dose in step b) whereas higher gloss powder coatings are obtained by a lower UV dose in step b). The UV doses used in step b) of the process according to the invention are in the range of 20 to 1000 mJ/cm², preferably, 50 to 800 mJ/cm², per one cycle. The total UV dose is in the range of 20 to 5000 mJ/cm².

Following the irradiation with high energy in step b), the irradiated powder coating particles are discharged in step c), and they are suitable for application onto a subtrate or for storage.

With regard to the application to a substrate, the irradiated powder coating particles of this invention may be applied by electrostatic spraying, thermal or flame spraying, or fluidized bed coating methods, all of which are known to those skilled in the art. The coatings may be applied to metallic and/or non-metallic substrates, and can be applied as a coating layer in a multi-layer film build.

The coatings according to the invention may be applied in a dry film thickness in a range of, e.g., 30 to 200 micrometer (µm) for each coating layer.

The applied powder coating particles of this invention are fused, molten and flowed out by increased temperature. This can be done, e.g., by IR-radiation, IR-radiation combined with hot-air convection, or hot-air convection. IR radiation includes also Near-Infrared radiation (NIR). Typically IR radiation uses wavelengths in the range of 0.76 µm to 1mm and NIR radiation used wavelengths in the range of 0.76 to 1.2 µm. The melting temperature, for example, may be in the range of 60 to 250°C, measured as substrate surface temperature.

The molten powder coating is then cured. This can be done by high-energy radiation again with a UV doses in a range of 100 to 5000 mJ/cm². It is also possible to expose the applied and melted powder coating layer to thermal energy. The coating layer may, for example, be exposed by convective and/or radiant heating to temperatures of approximately 60 to 250°C, preferably of 80 to 160°C, measured as substrate surface temperature. Exposing to thermal energy before, during and/or after irradiation with high- energy radiation is also possible.

Suitable powder coating binders with ethylenically unsaturated groups are, for example, any powder coating binder known to the skilled person, which can be crosslinked by free-radical polymerization. These powder coating binders can be prepolymers, such as, polymers and oligomers, containing, per molecule, one or more, free-radically polymerizable olefinic double bonds.

Examples of powder coating binders curable by free-radical polymerization include those based on epoxy, polyester, acrylic and/or urethane resins. Examples of such photopolymerizable resins include unsaturated polyesters, unsaturated (meth)acrylates, unsaturated polyester-urethanes, unsaturated (meth)acrylic-urethanes, epoxies, acrylated epoxies, epoxy-polyesters, polyester-acrylics, epoxy-acrylics.

(Meth)acrylic is respectively intended to mean acrylic and/or (meth)acrylic.

In addition to the resins, the powder coating compositions of this invention may contain additives that are conventional used in powder coating compositions. Examples of such additives include fillers, extenders, flow additives, photoinitiators, catalysts, hardeners, dyes and pigments. Compounds having anti-microbial activity may also be added to the powder coating compositions.

The powder coating compositions may contain photoinitiators in order to initiate the free-radical polymerization. Suitable photoinitiators include, for example, those which absorb in the wavelength range from 190 to 600 nm. Examples of photoinitiators for free-radically curing systems are benzoin and derivatives, acetophenone and derivatives, benzophenone and derivatives, thioxanthone and derivatives, anthraquinone, organo phosphorus compounds, such as, for example, acyl phosphine oxides.

The photoinitiators are used, for example, in quantities of 0.1 to 7 weight-%, relative to the total of resin solids and photoinitiators. The photoinitiators may be used individually or in combination.

The powder coating compositions may comprise pigmented or unpigmented powder coating agents for producing any desired coating layer of a one-layer coating or a multilayer coating. The compositions may contain transparent, color-imparting and/or special effect-imparting pigments and/or extenders. Suitable color-imparting pigments are any conventional coating pigments of an organic or inorganic nature. Examples of inorganic or organic color-imparting pigments are titanium dioxide, micronized titanium dioxide, carbon black, azopigments, and phthalocyanine pigments. Examples of special effect-imparting pigments are metal pigments, for example, made from aluminum, copper or other metals, interference pigments, such as metal oxide coated metal pigments and coated mica. Examples of usable extenders are silicon dioxide, aluminum silicate, barium sulfate, and calcium carbonate.

The additives are used in conventional amounts known to the person skilled in the art.

The powder coating composition may contain also further binder resins, such as, thermosetting resins, such as, in amounts of, e.g., 0 to 90 wt %, relative to the total resin solids, to make dual curing possible if desired. Such resins may be, for example, epoxy, polyester, (meth)acrylic and/or urethane resins.

The powder coating compositions are prepared by conventional manufacturing techniques used in the powder coating industry and known to the skilled person. For example, the ingredients used in the powder coating composition, can be blended together and heated to a temperature to melt the mixture and then the mixture is extruded. The extruded material is then cooled on chilled rollers, broken up and then ground to a fine powder, which can be classified to the desired grain size.

The average particle size is in the range of 1 to 300 µm, preferably of 20 to 200 µm.

In certain applications, the substrate to be coated may be preheated before the application of the powder, and then either heated after the application of the powder or not. For example, gas is commonly used for various heating steps, but other methods, e.g., microwaves, IR or NIR are also known. Also a primer can be applied, which seals the surface and provides the required electrical conductivity. UV-curable primers are also available.

Substrates, which may be considered, are metal, wooden substrates, wood fiber material, paper or plastic parts, for example, also fiber re-inforced plastic parts, for example, automotive and industrial bodies or body parts.

The process according to the invention provides coatings which have a rough or textured surface microscopically which is seen as low gloss, but otherwise appears smooth to the naked eye.

The present invention is further defined in the following Examples. It should be understood that these Examples are given by way of illustration only. From the above discussion and these Examples, one skilled in the art can ascertain the essential characteristics of this invention, and without departing from the spirit and scope thereof, can make various changes and modifications of the invention to adapt it to various uses and conditions. As a result, the present invention is not limited by the illustrative examples set forth herein below, but rather is defined by the claims contained herein below.

The following Examples illustrate the invention. All parts and percentages are on a weight basis unless otherwise indicated.

### Examples

### Example 1

### UV Powder Coating Composition of Prior Art

A clearcoat composition is formulated by dry-mixing of 97 wt% of Uvecoat^{®} 1000 (UCB Surface Specialties), an unsaturated polyester with methacrylate groups, 2 wt% of Irgacure^{®} 2959 (Ciba) as photoinitiator and 1 wt% of Powdermate^{®} EX-486 (Troy Chemical Company) as flow additive.

After mixing the components in the mixer, the coating composition was processed further by extrusion with a twin screw extruder at a temperature setting of the extruder of 110 to 120°C. After extruding, the molten composition was cooled down on a cooling belt and the resulted product was correspondingly crushed to the small chips. Afterwards, the chips were milled and sieved to a applicable particle size distribution typical for the electrostatic spraying in a range of 10 to120 µm.

The powder is sprayed onto a metal plate coated with black cationic electro-deposition primer, with an electrostatic spray gun to a film thickness of 80 µm. The sprayed powder pattern was heated using the combination of IR and convection heat of 120°C for 10 min. Afterwards, the hot metal panel with the molten powder coating was UV cured with the aid of medium-pressure Hg lamp (Fusion 240 W/cm emitters, with the max. intensive operational wavelength area of 200 to 390 nm). The UV dose for the curing step should be adjusted so that the coating is fully cured; typically with a UV dose of about 3000 mJ/cm².

### Example 2

### UV Powder Coating Composition of Prior Art

A clearcoat composition is formulated by dry-mixing of 88.5 wt% of Uvecoat^{®} 1000 (UCB Surface Specialties), an unsaturated polyester with methacrylate groups, 0,5 wt% of Irgacure^{®} 2959 (Ciba) as photoinitiator, 0,5 wt% of Powdermate^{®} EX-486 (Troy Chemical Company) as flow additive, 3.5 wt% of silica Syloid^{®} AI-1 (Grace) and 7 wt% of a PE/PA wax Ceraflour 995 (BYK).

The formulation, manufacture, application and curing steps are the same as mentioned above in the Example 1.

### Example 3

### Irradiated UV Powder Coating Composition According to the Invention

Preparation of the irradiated powder coating was achieved using the same powder formulation as previously described in Example 1. The powder coating sample (100 gram) was carefully charged into a powder sieve (150 µm mesh) equipped with a mechanical stirrer. After the stirrer was switched on, the powder began to pour discontinuously through the sieve into a plastic can receiver positioned at the ground. The distance between the sieve and the plstic can was setup at 100 cm. To irradiate the powder, a UV lamp was installed between the powder sieve and the plastic can at the half distance (50 cm) between the sieve and the can. The distance between the UV lamp and the center of the passing powder (measured from the center of the sieve) was established at 12 cm. To provide safety, the powder zone was separated from the UV lamp with an additionally installed quartz plate. Time required for the full work-up of the powder coating charge (100 gram) was fixed at 60 sec. Afterwards, the powder was collected in the can. In order to increase the dose of irradiation accumulated by the powder particles during the first irradiation cycle, the resulting powder was passed through the irradiation cycle once more. Afterwards, the powder was collected and stored until further application in a dark cool place (>10°C).

The specific UV dose was calculated as a dose of UV irradiation accumulated during the 60 seconds of irradiation cycle and divided by 100 gram, in other words dose of irradiation per 1 gram of powder coating. The calculated total dose of the two cycles of irradiation is 650 mJ/cm².

The resulting powder was sprayed onto a metal plate coated with a black cationic electro-deposition primer, with an electrostatic spray gun, to a film thickness of 80 µm. The sprayed powder was heated using the combination of IR and convection heat of 120°C for 10 min. Afterwards the hot metal panel with molten powder coating was UV cured with the aid of medium-pressure Hg lamp (Fusion 240 W/cm emitters, with the max. intensive operational wavelength area of 200 to 390 nm). The UV dose for the curing step should be adjusted so that the coating is fully cured; typically, with a UV dose of about 3000 mJ/cm².

### Example 4

### Testing of the Coatings

**Table 1**

| **Examples** | **60° gloss** | **Flexibility** | **100 MEK** | **Thickness** |
|---|---|---|---|---|
| | **(*)** | **(Erichson)** | **double** | **µm** |
| | | **(**)** | **rubs (***)** | |
| Example 1 | 72 | >8 | 4 | 58 |
| Example 2 | 42.6 | >8 | 4 | 51 |
| Example 3 | 23.2 | >8 | 4 | 55 |

| | | | | |
|---|---|---|---|---|
| (*) measured in accordance with DIN 67 530 (***) measured in accordance with the DIN ES ISO 1520 (***) measured in accordance with ASTM D 4752 | | | | |

As it can be seen from Table 1, the powder composition according to Example 3 gives a lower 60° gloss of the coating illustrating that the gloss level can be controlled using the process according to the invention. Technological properties of the coating, such as, flexibility and hardness are retained.

## Claims

1. A process of preparation of a powder coating composition providing a desired gloss level of the resulted coating comprising the following steps of
a) providing particles of a powder coating composition having a number average particle size in the range of 1 to 300 µm,
b) irradiating the particles with high energy radiation under near-ambient temperature, and
c) discharging the irradiated particles of the powder coating composition.

2. The process according to claim 1 wherein UV radiation is used as high-energy radiation in step b).

3. The process according to claim 1 wherein the irradiated particles are irradiated with a UV dose in the range of 20 to 1000 mJ/cm² per irradiation cycle.

4. The process according to claim 1 wherein the irradiated particles are irradiated with a total UV dose in the range of 20 to 5000 mJ/cm².

5. The process according to claim 1 wherein the irradiated particles are irradiated in one or two irradiation cycles.

6. The process according to claim 1 wherein the powder coating particles are placed in a powder feed dosator, pass the UV irradiation source capable of irradiating the powder particles and is collected in a powder collector.

7. The process according to claim 6 wherein wherein the powder coating particles are placed in a sieve dosator, pass the sieve and are irradiated with the high energy radiation of the UV source while being continuously or discontinuously flowing through the irradiation workspace between the sieve dosator and the collector for the irradiated powder particles.

8. The process according to claim 6 wherein a thermo-regulating system is used additionally.

9. A substrate surface coated with a powder coating composition prepared by the process according to claim 1.

## Patentansprüche

1. Verfahren zur Herstellung einer Pulverbeschichtungszusammensetzung, die einen gewünschten Glanzgrad der resultierenden Beschichtung liefert, wobei das Verfahren die folgenden Schritte aufweist:
a) Bereitstellen von Teilchen einer Pulverbeschichtungszusammensetzung mit einer zahlengemittelten Teilchengröße im Bereich von 1 bis 300 µm,
b) Bestrahlen der Teilchen mit energiereicher Strahlung bei einer Temperatur nahe der Umgebungstemperatur, und
c) Austragen der bestrahlten Teilchen der Pulverbeschichtungszusammensetzung.

2. Verfahren nach Anspruch 1, wobei UV-Strahlung als energiereiche Strahlung im Schritt b) angewandt wird.

3. Verfahren nach Anspruch 1, wobei die bestrahlten Teilchen mit einer UV-Dosis im Bereich von 20 bis 1000 mJ/cm² pro Bestrahlungszyklus bestrahlt werden.

4. Verfahren nach Anspruch 1, wobei die bestrahlten Teilchen mit einer UV-Gesamtdosis im Bereich von 20 bis 5000 mJ/cm² bestrahlt werden.

5. Verfahren nach Anspruch 1, wobei die bestrahlten Teilchen in einem oder zwei Bestrahlungszyklen bestrahlt werden.

6. Verfahren nach Anspruch 1, wobei die Pulverbeschichtungsteilchen in einen Pulverzuführungsdosierer eingebracht werden, die UV-Strahlungsquelle passieren, welche die Pulverteilchen bestrahlen kann, und in einem Pulverauffänger aufgefangen werden.

7. Verfahren nach Anspruch 6, wobei die Pulverbeschichtungsteilchen in einen Siebdosierer eingebracht werden, das Sieb passieren und mit der energiereichen Strahlung der UV-Quelle bestrahlt werden und dabei kontinuierlich oder diskontinuierlich durch den Bestrahlungsraum zwischen dem Siebdosierer und dem Auffänger für die bestrahlten Pulverteilchen fließen.

8. Verfahren nach Anspruch 6, wobei zusätzlich ein Temperaturregelungssystem eingesetzt wird.

9. Substratoberfläche, die mit einer nach dem Verfahren von Anspruch 1 hergestellten Pulverbeschichtungszusammensetzung beschichtet ist.

## Revendications

1. Procédé de préparation d'une composition de revêtement en poudre fournissant un niveau souhaité de brillant du revêtement qui résulte comprenant les étapes suivantes de:
a) fourniture de particules d'une composition de revêtement en poudre ayant une taille de particule moyenne en nombre située dans la plage de 1 à 300 µm,
b) l'irradiation des particules avec un rayonnement de haute énergie sous la température presque ambiante, et
c) la décharge des particules irradiées de la composition de revêtement en poudre.

2. Procédé selon la revendication 1, dans lequel le rayonnement UV est utilisé comme rayonnement de haute énergie dans l'étape b).

3. Procédé selon la revendication 1, dans lequel les particules irradiées sont irradiées avec une dose d'UV située dans la plage de 20 à 1000 mJ/cm² par cycle d'irradiation.

4. Procédé selon la revendication 1, dans lequel les particules irradiées sont irradiées avec une dose totale d'UV située dans la plage de 20 à 5000 mJ/cm².

5. Procédé selon la revendication 1, dans lequel les particules irradiées sont irradiées en un ou deux cycle(s) d'irradiation.

6. Procédé selon la revendication 1, dans lequel les particules de revêtement en poudre sont placées dans un doseur d'alimentation de poudre, passent la source de rayonnement UV capable d'irradier les particules de poudre et sont recueillies dans un collecteur de poudre.

7. Procédé selon la revendication 6, dans lequel les particules de revêtement en poudre sont placées dans un doseur avec tamis, passent le tamis et sont irradiées avec le rayonnement de haute énergie de la source d'UV tout en s'écoulant de manière continue ou discontinue à travers l'espace de travail d'irradiation entre le doseur avec tamis et le collecteur de particules de poudre irradiées.

8. Procédé selon la revendication 6, dans lequel un système de thermorégulation est utilisé de manière supplémentaire.

9. Surface formant substrat revêtue d'une composition de revêtement en poudre préparée par le procédé selon la revendication 1.
